(19) Europäisches Patentamt
European Patent Office
Office européen des brevets

(11) **EP 2 762 875 B1**

(12) **EUROPEAN PATENT SPECIFICATION**

(45) Date of publication and mention
of the grant of the patent:
**17.07.2019 Bulletin 2019/29**

(51) Int Cl.:
***G01N 27/90*** *(2006.01)*

(21) Application number: **12837050.9**

(22) Date of filing: **25.09.2012**

(86) International application number:
**PCT/JP2012/074563**

(87) International publication number:
**WO 2013/047521 (04.04.2013 Gazette 2013/14)**

(54) **EDDY CURRENT FLAW DETECTOR**

WIRBELSTROMFEHLERDETEKTOR

DÉTECTEUR D'ANOMALIES PAR ANALYSE DE COURANTS DE FOUCAULT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2011 JP 2011209572**

(43) Date of publication of application:
**06.08.2014 Bulletin 2014/32**

(73) Proprietor: **Kabushiki Kaisha Toshiba
Minato-ku
Tokyo 105-8001 (JP)**

(72) Inventors:
• **KOBAYASHI, Noriyasu**
**Tokyo 105-8001 (JP)**
• **UENO, Souichi**
**Tokyo 105-8001 (JP)**
• **NOMURA, Kota**
**Tokyo 105-8001 (JP)**
• **OCHIAI, Makoto**
**Tokyo 105-8001 (JP)**
• **KITAJIMA, Yuko**
**Tokyo 105-8001 (JP)**
• **MARUYAMA, Shigeki**
**Tokyo 105-8001 (JP)**
• **ICHIKAWA, Hiroya**
**Tokyo 105-8001 (JP)**

(74) Representative: **Kramer Barske Schmidtchen
Patentanwälte PartG mbB
European Patent Attorneys
Landsberger Strasse 300
80687 München (DE)**

(56) References cited:
GB-A- 573 182          GB-A- 1 503 332
JP-A- H09 325 132      JP-A- H11 258 211
JP-A- 2006 053 053     JP-A- 2007 240 427
JP-A- 2009 276 232     US-A- 2 329 812
US-A1- 2009 079 424

**Description**

[Technical Field]

The present invention relates to an eddy-current flaw detection technique to detect defects, such as cracks, present in an inspection object.

[Background Art]

An eddy-current flaw detecting apparatus is used to detect cracks present in the vicinity of a metal surface of an inspection object. This apparatus generates an AC magnetic field by a coil section arranged on or above the metal surface to induce an eddy current in the vicinity of the metal surface by this AC magnetic field. If any cracks (defects) are present in the vicinity of the metal surface, the flow of the induced eddy current changes, thus also changing the strength distribution of the magnetic field induced by the eddy current.

By detecting this change in the strength distribution of the induced magnetic field as a change in the output waveform of the arranged coil section, it is possible to detect the presence or absence of cracks.

In this apparatus, if a distance (liftoff) between the surface and the coil section is made longer in a case, for example, where flaw detection is performed on an inspection object having a curved surface, the sensitivity of crack detection decreases and noise increases. The apparatus thus has the problem of the S/N ratio of an output waveform becoming lower.

As a related art for solving such problems, there has been disclosed a technique to apply a ferrite core to a coil section to prevent the decrease of an S/N ratio associated with a liftoff (see, for example, JP 2011-117872 A).

Such a method for preventing the decrease of an S/N ratio associated with the liftoff by contriving the structure or the material of the coil section as used in the above-described related art has had limitations if a curved surface or a circular tube having a smaller curvature radius is used as the inspection object. Since an even larger liftoff is anticipated in this case, there is a demand for the creation of a method for preventing the decrease of an S/N ratio which can be implemented along with the above-described method for contriving the structure or the material of the coil section and which works on other principles.

Further electromagnetic inspection devices are known from US 2,329,812 B and GB 573 182 A.

The present invention has been accomplished in view of such circumstances as described above. Accordingly, an object of the present invention is to provide an eddy-current flaw detection technique to improve the S/N ratio of an output waveform of a coil section for detecting defects in an inspection object.

This object is achieved by an eddy-current flaw detecting apparatus of claim 1.

According to the present invention, there is provided an eddy-current flaw detection technique to improve the S/N ratio of an output waveform of a coil section for detecting cracks (defects) in an inspection object.

[Brief Description of the Drawings]

Fig. 1 is a circuit diagram illustrating a first embodiment of an eddy-current flaw detecting apparatus.
Fig. 2A is a circuit diagram illustrating a second embodiment of the eddy-current flaw detecting apparatus, whereas Fig. 2B is a graph illustrating a relationship between the power supply frequency of a power supply section and an excitation current flowing in the circuit of the apparatus.
Fig. 3A is a circuit diagram illustrating a third embodiment of the eddy-current flaw detecting apparatus, whereas Fig. 3B is a circuit diagram illustrating a modified example of the capacitor.
Fig. 4A is a circuit diagram illustrating a changeover switch in a first setting condition in a fourth embodiment of the eddy-current flaw detecting apparatus according to the present invention, whereas Fig. 4B is a circuit diagram illustrating the changeover switch in a second setting condition.
Fig. 5 is a graph illustrating the waveform of a current caused to flow in the circuit by the operation of the power supply section in the fourth embodiment of the eddy-current flaw detecting apparatus.
Fig. 6 is a circuit diagram illustrating a fifth embodiment of the eddy-current flaw detecting apparatus.
Fig. 7 is a circuit diagram illustrating a sixth embodiment of the eddy-current flaw detecting apparatus.
Fig. 8A is a graph illustrating a change in the detection sensitivity of a coil section with the increase of a liftoff in a case where no resonance circuits are used, whereas Fig. 8B is a graph illustrating a change in the detection sensitivity of a coil section with the increase of a liftoff in a case where the resonance frequency of a resonance circuit is fixed, and Fig. 8C is a graph illustrating a change in the detection sensitivity of a coil section with the increase of a liftoff in a case where the resonance frequency of a resonance circuit is varied in correspondence with a liftoff.
Fig. 9 is a schematic view when an eddy-current flaw detecting apparatus according to each embodiment is applied to an inspection object composed of a nonmagnetic substance and a magnetic substance.
Fig. 10 is a schematic view when an eddy-current flaw detecting apparatus according to each embodiment is applied to an inspection object composed of a nonmagnetic substance and a magnetic substance stacked on each other.

[Description of Embodiments]

(First Embodiment)

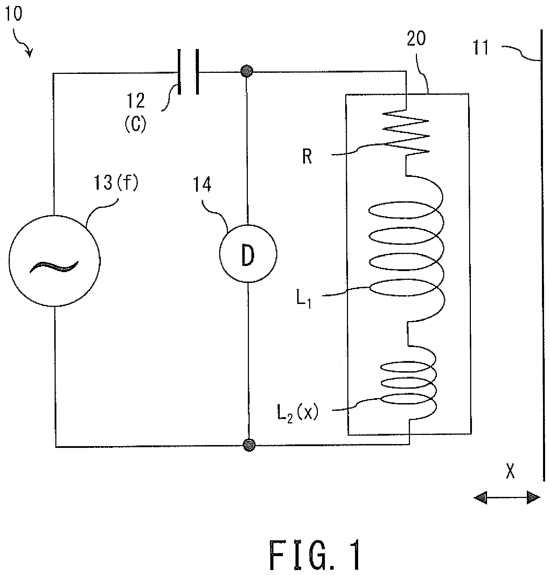

Hereinafter, embodiments will be described according to the drawings Fig. 1 to 3B, 6, and 7 as background information.

As illustrated in Fig. 1, an eddy-current flaw detecting apparatus 10 according to a first embodiment comprises a power supply section 13 for generating an AC magnetic field in a coil section 20 to induce an eddy current in an inspection object 11; a detecting section 14 for detecting an output waveform of the coil section 20 to which an induced magnetic field of the eddy current is applied; and a capacitor 12 for forming a resonance circuit along with the coil section 20.

The circuit of the eddy-current flaw detecting apparatus 10 is formed of the power supply section 13 for providing an AC voltage having a frequency f, the capacitor 12 having an electrostatic capacitance C, and the coil section 20. The coil section 20 features an internal resistance R, an intrinsic inductance $L_1$ of a coil, and a variable inductance $L_2(x)$ dependent on a liftoff x.

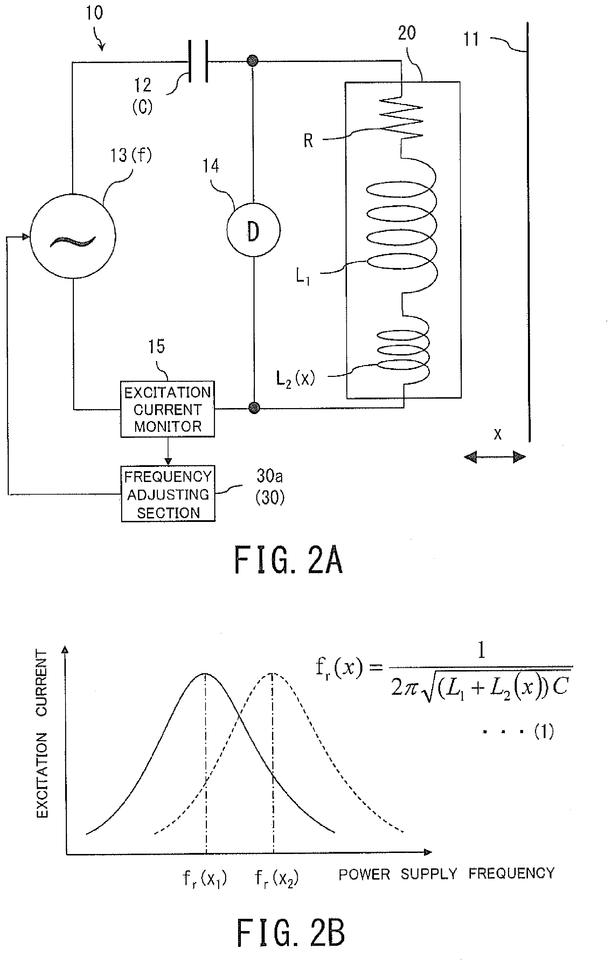

When the AC voltage having the frequency f is applied to the circuit by the power supply section 13, an excitation current of the same frequency f is supplied to the coil section 20. Then, the circuit goes into a resonant state under the condition of the frequency f (= $f_r$) of the power supply section 13 satisfying Equation (1) shown below. The excitation current flowing in the circuit thus takes a local maximum value (see Fig. 2B).

$$2\pi \cdot f_r = ((L_1 + L_2(x))C)^{-1/2} \quad (1)$$

When the excitation current is supplied to the coil section 20, an AC magnetic field is generated within and around the coil section. An eddy current is induced in the vicinity of a surface of the inspection object 11 by this AC magnetic field. Under this condition, the surface of the inspection object 11 is scanned with the coil section 20. Consequently, the flow of the induced eddy current changes at a point where a defect, such as a crack, is present, thus changing the strength distribution of a magnetic field induced by this eddy current.

This change in the magnetic field strength distribution is received by the coil section 20 and a change in the output waveform of the coil section 20 is detected at the detecting section 14, thereby detecting the presence or absence of cracks.

The excitation current supplied to the coil section 20 is maximum in a case where the settings of the power supply section 13, the capacitor 12 and the coil section 20 satisfy resonance conditions shown by Equation (1) mentioned above. This also maximizes the strength of an AC magnetic field generated by this excitation current, an eddy current induced by this AC magnetic field, and the strength of a magnetic field induced by this eddy current. When the magnetic field induced by this eddy current is applied to the coil section 20, only the frequency component of the magnetic field corresponding to the power supply frequency f is selectively detected on the basis of the resonance characteristics of the circuit. This selective detection improves the S/N ratio of an output waveform of the detecting section 14 and the sensitivity of detection of defects, such as cracks.

Accordingly, the decrease of defect detection sensitivity is prevented even if a liftoff x large in value to some extent is present between the coil section 20 and the inspection object 11, as long as the resonance conditions (Equation (1)) are satisfied.

The inspection object 11 to which an eddy-current flaw detecting apparatus 10 according to an embodiment is applied is preferably a pipe or a curved surface which is small in curvature radius and the liftoff x of which is therefore unavoidably large. The eddy-current flaw detecting apparatus 10 is also applicable to a flat surface without difficulty, however.

There can be mentioned various ways (not illustrated) of scanning a surface of the inspection object 11 with the coil section 20. For example, scanning can be achieved by means of a wheeled dolly, traction with a wire, or extrusion using a pressure gas.

Although the circuit comprises an LC series circuit in each embodiment, the circuit may be formed of an LC parallel circuit as long as the LC parallel circuit is configured to place the circuit in a resonant state.

(Second Embodiment)

As illustrated in Fig. 2A, an eddy-current flaw detecting apparatus 10 of a second embodiment comprises an excitation current monitor 15 for monitoring an excitation current caused to flow in the circuit (coil section 20) by the operation of the power supply section 13; and a frequency adjusting section 30a (adjustment section 30) for adjusting the power supply frequency f of the power supply section 13, so that the circuit goes into a resonant state. Note that in Fig. 2A, constituent parts identical or corresponding to those of Fig. 1 are denoted by like reference numerals and characters and will not be discussed again here.

Fig. 2B is a graph illustrating a relationship between the power supply frequency f of the power supply section 13 and an excitation current flowing in the circuit.

As shown by a solid line in this graph, an excitation current supplied to the coil section 20 takes a maximum value as long as an AC voltage having an AC voltage resonance frequency of $f_r(x_1)$ satisfying Equation (1) mentioned above is applied by the power supply section 13 under the premise that a liftoff $X_1$ is constant. An eddy current induced in the inspection object 11 is also maximized, thus causing the output waveform of the detecting section 14 to be also maximum in strength. Consequently, the defect detection sensitivity of the inspection object 11 is maximum.

However, if a distance between a surface of the inspection object 11 and the coil section 20 for scanning the object varies and the liftoff therefore changes to $x_2$, the variable inductance $L_2$ also changes, thus causing the distribution of the excitation current to shift as shown by a dashed line.

In cases where the excitation current distribution is shown in this way by the dashed line, the circuit falls out of a resonant state if the AC voltage of the power supply section 13 remains at a resonance frequency of $f_r(x_1)$. Consequently, the excitation current supplied to the coil section 20 decreases, and therefore, the defect detection sensitivity of the inspection object 11 decreases as well.

Accordingly, the resonance frequency of the AC voltage of the power supply section 13 is changed to $f_r(x_2)$ to maintain the resonant state of the circuit, thereby maintaining the defect detection sensitivity of the inspection object 11 at a maximum level.

(Third Embodiment)

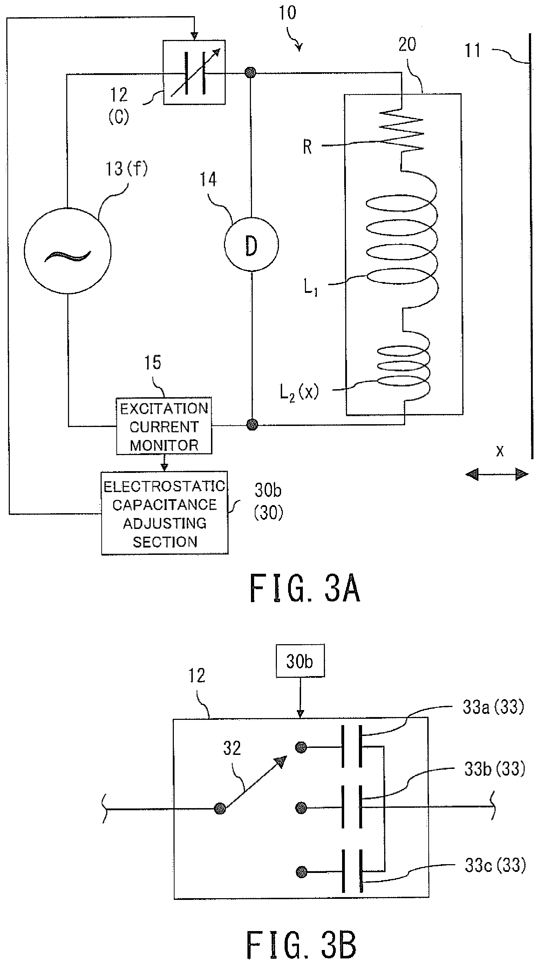

As illustrated in Fig. 3A, an eddy-current flaw detecting apparatus 10 of a third embodiment comprises an electrostatic capacitance adjusting section 30b (adjustment section 30) for adjusting the electrostatic capacitance C of a capacitor 12, so that the circuit of the apparatus goes into a resonant state. Note that in Fig. 3A, constituent parts identical or corresponding to those of Fig. 1 are denoted by like reference numerals and characters and will not be discussed again here.

In the third embodiment, the electrostatic capacitance C of the capacitor 12 is adjusted to satisfy Equation (1) if the liftoff x changes. This apparatus configuration maintains the resonant state of the circuit, thereby maintaining the defect detection sensitivity of the inspection object 11 at a maximum level.

Fig. 3B is a circuit diagram illustrating a modified example of the capacitor 12.

The capacitor 12 illustrated in Fig. 3A is configured to adjust the electrostatic capacitance C in a continuous manner (adjusted by, for example, making a distance between electrode plates constituting the capacitor 12 variable using a motor and a gear). In the capacitor 12 illustrated in Fig. 3B, a plurality (three in the figure) of capacitors 33 (33a, 33b and 33c) is selectively switched over with a switch 32 to adjust the electrostatic capacitance C in a stepwise manner.

Note that the adjustment section 30 (30a and 30b) can adjust the power supply frequency f and the electrostatic capacitance C according to not only the excitation current monitor 15 but also the output of the detecting section 14.

(Fourth Embodiment)

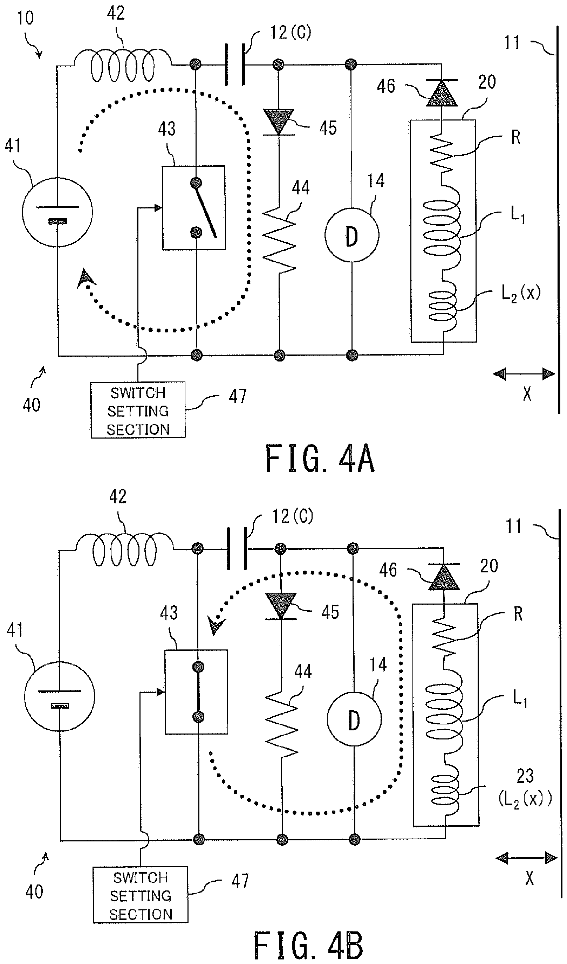

As illustrated in Fig. 4, according to the invention a power supply section 40 in an eddy-current flaw detecting apparatus 10 of a fourth embodiment includes a DC power supply 41, a charging coil 42 and a changeover switch 43. When this changeover switch 43 is placed in a first setting condition (Fig. 4A), a closed circuit is formed by the DC power supply 41, the charging coil 42 and a capacitor 12. When this changeover switch 43 is placed in a second setting condition (Fig. 4B), a closed circuit is formed by the capacitor 12 and the coil section 20. Note that in Fig. 4, constituent parts identical or corresponding to those of Fig. 1 are denoted by like reference numerals and characters and will not be discussed again here.

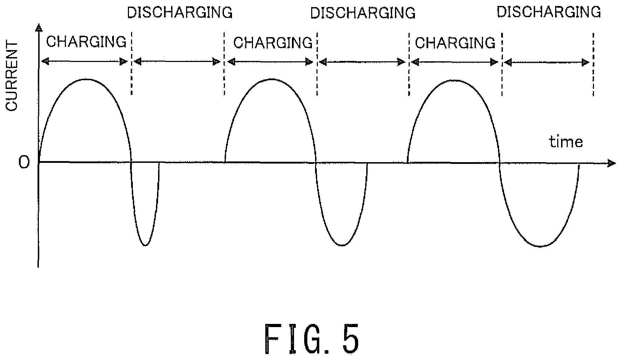

Fig. 5 is a graph illustrating the waveform of a current caused to flow in the circuit by the operation of the power supply section 40 in the eddy-current flaw detecting apparatus 10 (Fig. 4) of the fourth embodiment.

A switch setting section 47 goes into a first setting condition (Fig. 4A) in each charging period shown in Fig. 5 and into a second setting condition (Fig. 4B) in each discharging period.

In the first setting condition shown in Fig. 4A, a circuit composed of the DC power supply 41, the charging coil 42, the capacitor 12 and a resistor 44 is formed by the functions of diodes 45 and 46. Then, electrical charges are charged from the DC power supply 41 to the capacitor 12 at a response speed consistent with the time constant of this circuit.

At a point where this charging is completed, the switch setting section 47 switches over to the second setting condition shown in Fig. 4B, a circuit composed of the capacitor 12 and the coil section 20 is formed likewise by the functions of the diodes 45 and 46. Then, electrical charges charged in the capacitor 12 are discharged to the coil section 20 as an excitation current at a response speed consistent with the time constant of this circuit.

In cases where electrical charges charged to the capacitor 12 are discharged to the coil section 20 as described above, the resonance conditions of the circuit are always satisfied even if the liftoff x changes.

Accordingly, there is no need to control the frequency f of the power supply section 40 or the electrostatic capacitance C of the capacitor 12 in the fourth embodiment. The configuration of the apparatus can therefore be simplified.

(Fifth Embodiment)

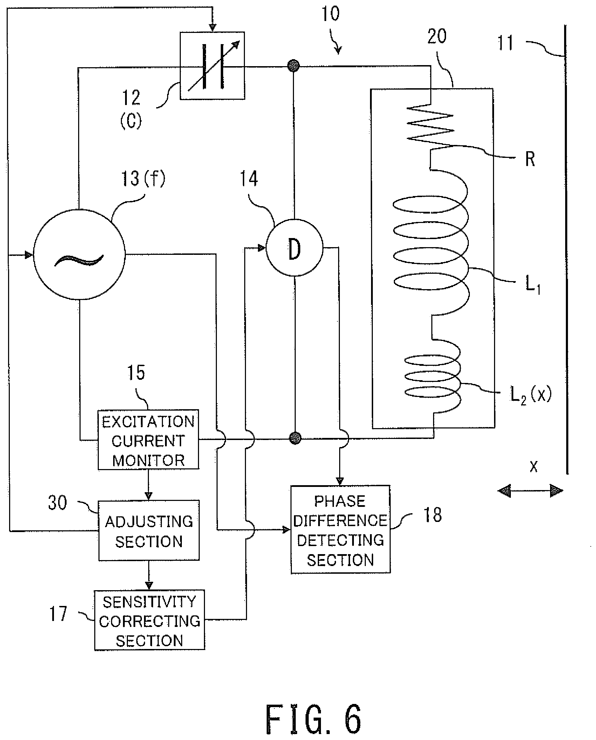

As illustrated in Fig. 6, an eddy-current flaw detecting apparatus 10 according to a fifth embodiment comprises a sensitivity correcting section 17 for correcting the sensitivity of a detecting section 14, and a phase difference detecting section 18 for detecting a phase difference between the output waveforms of a power supply section 13 and a detecting section 14, as the result of the power supply frequency f of the power supply section 13 or the electrostatic capacitance C of the capacitor 12 being made adjustable. Note that in Fig. 6, constituent parts identical or corresponding to those of Fig. 1 are denoted by like reference numerals and characters and will not be discussed again here.

When the frequency f of the power supply section 13 is varied by an adjustment section 30, the sensitivity of defect detection by a coil section 20 also varies. Hence, a relationship between the frequency f of the power supply section 13 and the sensitivity of defect detection by the coil section 20 is previously compiled into a database to determine the sensitivity correction coefficient of the detecting section 14 with relevant to the power supply frequency f. Then, the sensitivity correcting section 17 feeds back a sensitivity correction coefficient corresponding to setting information on the power supply frequency f acquired from the adjustment section 30 to the detecting section 14, thereby always maintaining the defect detection sensitivity at a constant level.

When the power supply frequency f is varied, the phase angle of the output waveform of the coil section 20 detected by the detecting section 14 also varies. The phase angle thus detected includes defect information attributable to defects and noise information attributable to a liftoff. Each piece of information varies differently with respect to a variation in the power supply frequency f.

By comparing the variation of the power supply frequency f and the variation of phase angle information in the phase difference detecting section 18, it is possible to determine whether the information acquired by the detecting section 14 is attributable to defects or noise.

(Sixth Embodiment)

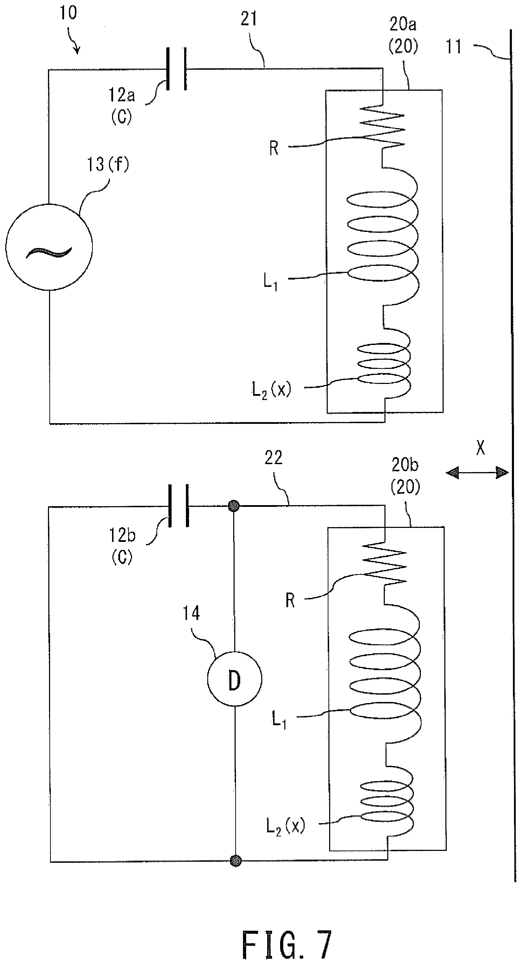

As illustrated in Fig. 7, a first coil section 20a for generating an AC magnetic field whereby an eddy current is induced in an inspection object 11 and a second coil section 20b for detecting the magnetic field of the eddy current thus induced are separately formed in a coil section 20 of an eddy-current flaw detecting apparatus 10 according to a sixth embodiment. Note that in Fig. 7, constituent parts identical or corresponding to those of Fig. 1 are denoted by like reference numerals and characters and will not be discussed again here.

Here, a positional relationship between the first coil section 20a and the second coil section 20b is fixed, and a surface of the inspection object 11 is scanned with both coil sections in a unified manner. A remote-field eddy-current flaw detection apparatus or the like has a configuration corresponding to such a configuration as described above.

A first resonance circuit 21 including the first coil section 20a is provided with a power supply section 13 and a first capacitor 12a. A second resonance circuit 22 including the second coil section 20b is provided with a detecting section 14 and a second capacitor 12b.

In the sixth embodiment, the electrostatic capacitance C of the first capacitor 12a and the inductance $L_1 + L_2(x)$ of the first coil section 20a in the first resonance circuit 21 and the electrostatic capacitance C of the second capacitor 12b and the inductance $L_1 + L_2(x)$ of the second coil section 20b in the second resonance circuit 22 are set so that the resonance frequency $f_r$ shown by Equation (1) mentioned earlier equals the power supply frequency f. In other words, the electrostatic capacitances and the inductances are set so that the resonance frequencies of the first resonance circuit 21 and the second resonance circuit 22 are the same.

Consequently, the resonance conditions shown by Equation (1) mentioned earlier are satisfied in the first resonance circuit 21, and an excitation current supplied to the first coil section 20a is maximized. In addition, an eddy current induced by this excitation current is made larger and the strength of a magnetic field induced by this eddy current is made higher.

When the magnetic field induced by this eddy current is applied to the second coil section 20b, only the frequency component of the magnetic field corresponding to the power supply frequency f is selectively detected on the basis of the resonance characteristics of the second resonance circuit 22. This selective detection improves the S/N ratio of an output waveform of the detecting section 14 and the sensitivity of detection of defects, such as cracks.

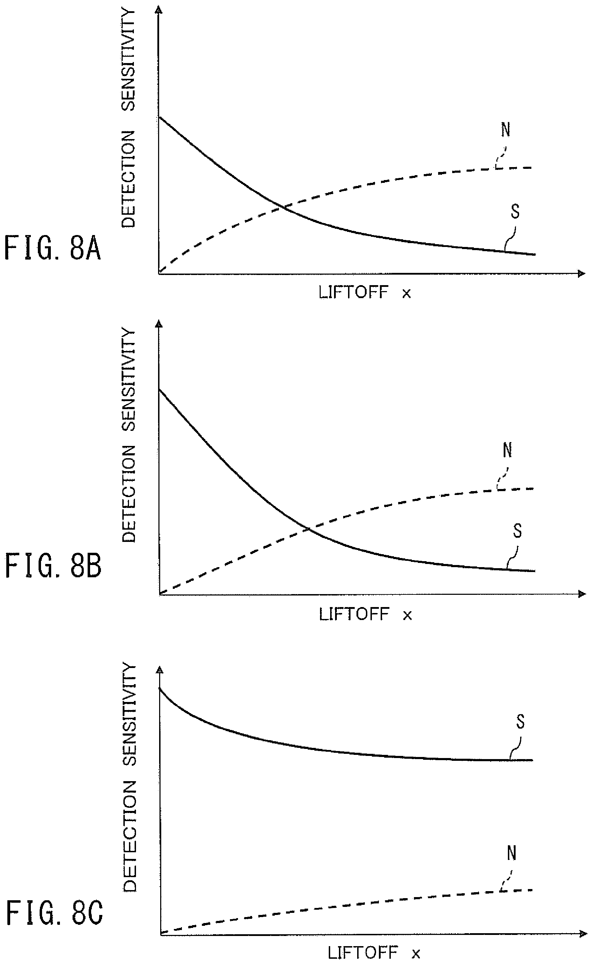

The principle that an S/N ratio improves and the sensitivity of detection of defects, such as cracks, increases in each embodiment will be described with reference to Fig. 8.

Fig. 8A is a graph illustrating a change in the detection sensitivity of a coil section with the increase of a liftoff in a case where no resonance circuits are used.

In general, the eddy-current flaw detecting apparatus 10 is tuned so that detection sensitivity S is maximum at a point where liftoff x = 0. As conceptually illustrated Fig. 8A, the detection sensitivity S decreases and noise N increases along with the increase of the liftoff x.

Fig. 8B is a graph illustrating a change in the detection sensitivity of a coil section with the increase of a liftoff in a case where a resonance circuit having a fixed resonance frequency is used.

In this case, the tendency of the detection sensitivity S to decrease and the noise N to increase along with the increase of the liftoff x is the same as the tendency in the case where no resonance circuits are used (Fig. 8A). Initial sensitivity (sensitivity at a point where liftoff x = 0) is made higher by the use of the resonance circuit, however, and the decrease of the S/N ratio is prevented accordingly.

Fig. 8C is a graph illustrating a change in the detection sensitivity of a coil section with the increase of a liftoff in a case where a resonance circuit having a resonance frequency variable according to the liftoff is used.

In this case, the increase of the noise N with the increase of the liftoff x is prevented, in addition to the initial sensitivity being improved. Consequently, an excellent S/N ratio can be obtained even if the liftoff is large.

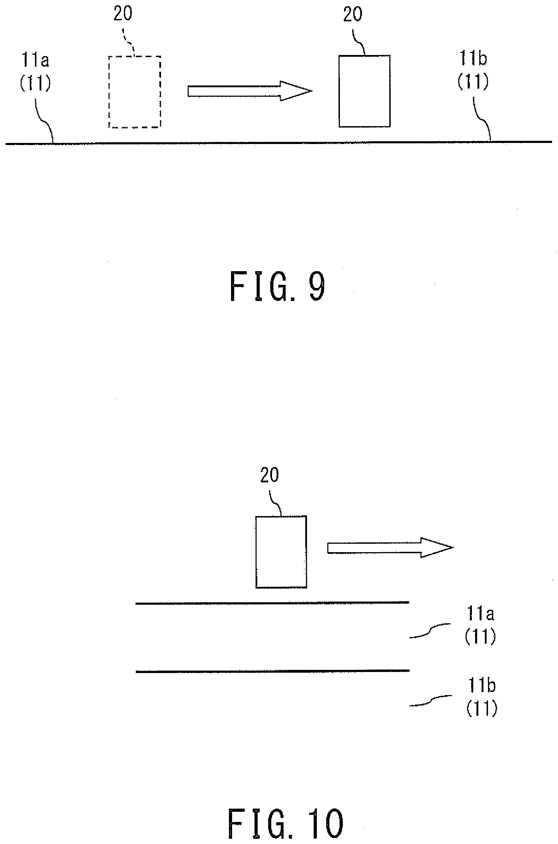

Fig. 9 is a schematic view when an eddy-current flaw detecting apparatus according to each embodiment is applied to an inspection object 11 composed of a nonmagnetic substance 11a and a magnetic substance 11b.

The resonance circuit of the apparatus is set so as to be in a resonant state while flaw detection is performed on a nonmagnetic substance 11a and so as to be out of a resonant state while flaw detection is performed on a magnetic substance 11b.

Note that the inductance of a coil greatly differs depending on whether the inspection object 11 is the nonmagnetic substance 11a or the magnetic substance 11b. Accordingly, if the power supply frequency f and the electrostatic capacitance C are adjusted so that the resonance circuit goes into a resonant state at the nonmagnetic substance 11a, the resonance circuit automatically falls out of the resonant state when the apparatus is switched over to the magnetic substance 11b.

In general, when flaw detection is performed on a surface of the magnetic substance 11b, the sensitivity of the coil section 20 increases due to the effects of the high magnetic permeability of the magnetic substance. This high magnetic permeability has a variation within the magnetic substance 11b, however, thus leading to high noise at the time of flaw detection.

Accordingly, when flaw detection is performed on a surface of the nonmagnetic substance 11a, the resonance conditions of the circuit are satisfied to improve defect detection sensitivity. When flaw detection is performed on a surface of the magnetic substance 11b, the resonance conditions of the circuit are not satisfied to reduce noise and improve defect detection sensitivity.

(Seventh Embodiment)

Fig. 10 is a schematic view when an eddy-current flaw detecting apparatus 10 according to each embodiment is applied to an inspection object 11 composed of a nonmagnetic substance 11a and a magnetic substance 11b to perform flaw detection from the laminating direction thereof.

An eddy-current flaw detecting apparatus 10 according to each embodiment, when applied to such an inspection object as illustrated in Fig. 10 to perform flaw detection with the nonmagnetic substance 11a, for example, as the object to be inspected, is configured so that a resonance circuit resonates with the nonmagnetic substance 11a. Since the resonance circuit does not go into a resonant state for the magnetic substance 11b, sensitivity is improved only for the nonmagnetic substance 11a. Consequently, noise resulting from the presence of the magnetic substance 11b is relatively suppressed.

Although a description has been made of an arrangement in which the nonmagnetic substance 11a is opposed to the eddy-current flaw detecting apparatus 10, the positional relationship between the nonmagnetic substance 11a and the magnetic substance 11b may be reversed. Examples of such an inspection object include a structure welded or coated with a material different from a base material, and a location where a piping support overlaps with pipes being supported thereby.

Note that in the sixth and seventh embodiments, a description has been made on the premise that the inspection object 11 is composed of the nonmagnetic substance 11a and the magnetic substance 11b. However, the inspection object may be composed of members different in magnetic permeability, rather than the nonmagnetic substance and the magnetic substance. Consequently, the same advantageous effect can be obtained by setting the apparatus so as to satisfy resonance conditions for either one of the members.

In particular, a significant advantageous effect can be obtained if the apparatus is set so as to satisfy resonance conditions for a member lower in magnetic permeability. If the apparatus is set so as to satisfy resonance conditions for a member higher in magnetic permeability, sensitivity is increased for the member having higher magnetic permeability. Consequently, it is possible to inspect, for example, a high-permeability member present in an area from the inner surface to the outer surface of a pipe (low in magnetic permeability).

According to an eddy-current flaw detecting apparatus of at least one of the above-described embodiments, it is possible to prevent the decrease of defect detection sensitivity with the increase of a liftoff by including a capacitor for forming a resonance circuit along with a coil section. It is also possible to improve defect detection sensitivity without having to make the coil section (sensor head) larger.

[Reference Signs List]

10...eddy-current flaw detecting apparatus, 11...inspection object, 11a...nonmagnetic substance, 11b...magnetic substance, 12...capacitor, 12a...first capacitor, 12b...second capacitor, 13...power supply section, 40...power supply section, 14...detecting section, 15...excitation current monitor, 17...sensitivity correcting section, 18...phase difference detecting section, 20...coil section, 20a...first coil section, 20b...second coil section, 21...first resonance circuit, 22...second resonance circuit, 30a(30)...frequency adjusting section, 30b(30)...electrostatic capacitance adjusting section, 32...switch, 33...capacitors, 41...DC power supply, 42...charging coil, 43...changeover switch, 44...resistor, 45...diodes, 46...diodes, 47...switch setting section, C...electrostatic capacitance, f...power supply frequency, $L_1$...intrinsic inductance of a coil, $L_2(x)$...variable inductance, $L_2(x)$...dependent on a liftoff.

**Claims**

1. An eddy-current flaw detecting apparatus comprising:

   a power supply section including a DC power supply (41), a charging coil (42), and a changeover switch (43),
a capacitor (12),
a first diode (45),
a resistor (44),
a second diode (46),
a coil section (20) for detecting an induced magnetic field of the eddy current; and
a detecting section (14) for detecting an output waveform of the coil section (20);
**characterized in that** the elements of the apparatus are arranged so that,
when the changeover switch (43) is in a first setting condition, a circuit is formed comprising the DC power supply (41), the charging coil (42), the capacitor (12) and the resistor (44) by the functions of the diode (45) and the diode (46), then, electrical charges are charged from the DC power supply (41) to the capacitor (12); and
when the changeover switch (43) is in a second setting condition, a circuit is formed comprising the capacitor (12) and the coil section (20) by the functions of the diode (45) and the diode (46), then, electrical charges charged in the capacitor (12) are discharged to the coil section (20) as an excitation current to induce an eddy current in an inspection object, and
the detecting section (14) is configured to detect an output waveform of the coil section (20) to which an induced magnetic field of the eddy current is applied.

## Patentansprüche

1. Eine Wirbelstrom-Fehlererkennungsvorrichtung mit einem Stromversorgungsabschnitt mit einer Gleichstromversorgung (41), einer Ladespule (42) und einem Umschalter (43),
einem Kondensator (12),
einer ersten Diode (45),
einem Widerstand (44),
einer zweiten Diode (46),
einem Spulenabschnitt (20) zum Erfassen eines induzierten Magnetfeldes des Wirbelstroms; und
einem Erfassungsabschnitt (14) zum Erfassen einer Ausgangswellenform des Spulenabschnitts (20);
**dadurch gekennzeichnet, dass** die Elemente der Vorrichtung derart angeordnet sind, dass
wenn sich der Umschalter (43) in einem ersten Einstellzustand befindet, eine Schaltung ausgebildet wird, die die Gleichstromversorgung (41), die Ladespule (42), den Kondensator (12) und den Widerstand (44) durch die Funktionen der Diode (45) und der Diode (46) umfasst, elektrische Ladungen von der Gleichstromversorgung (41) zu dem Kondensator (12) geladen werden; und
wenn sich der Umschalter (43) in einem zweiten Einstellzustand befindet, eine Schaltung ausgebildet wird, die den Kondensator (12) und den Spulenabschnitt (20) durch die Funktionen der Diode (45) und der Diode (46) umfasst, in dem Kondensator (12) geladene elektrische Ladungen als Anregungsstrom auf den Spulenabschnitt (20) entladen werden, um einen Wirbelstrom in einem Prüfobjekt zu induzieren, und
der Erfassungsabschnitt (14) konfiguriert ist, um eine Ausgangswellenform des Spulenabschnitts (20) zu erfassen, auf den ein induziertes Magnetfeld des Wirbelstroms angewandt wird.

## Revendications

1. Appareil de détection d'anomalies par analyse de courants de Foucault comprenant :

une section d'alimentation électrique comprenant une alimentation en courant continu (41), une bobine de charge (42) et un commutateur inverseur (43),
un condensateur (12),
une première diode (45),
une résistance (44),
une deuxième diode (46),
une section de bobine (20) pour détecter un champ magnétique induit du courant de Foucault; et
une section de détection (14) pour détecter une forme d'onde de sortie de la section de bobine (20) ;
**caractérisé en ce que** les éléments de l'appareil sont disposés de telle sorte que, lorsque le commutateur inverseur (43) est dans un premier état de réglage, un circuit est formé comprenant l'alimentation en courant continu (41), la bobine de charge (42), le condensateur (12) et la résistance (44) par les fonctions de la diode (45) et la diode (46), puis des charges électriques sont chargées depuis l'alimentation en courant continu (41) vers le condensateur (12) ; et
lorsque le commutateur inverseur (43) est dans une deuxième condition de réglage, un circuit comprenant le condensateur (12) et la section de bobine (20) est formé par les fonctions de la diode (45) et de la diode (46), puis des charges électriques chargées dans le condensateur (12) sont déchargées vers la section de bobine (20) comme courant d'excitation pour induire un courant de Foucault dans un objet à contrôler, et
la section de détection (14) est configurée pour détecter une forme d'onde de sortie de la section de bobine (20), à laquelle un champ magnétique induit du courant de Foucault est appliqué.

EP 2 762 875 B1

FIG. 1

8

FIG. 2A

$$f_r(x) = \frac{1}{2\pi\sqrt{(L_1 + L_2(x))C}}$$

$\cdots$ (1)

FIG. 2B

FIG. 3A

FIG. 3B

FIG. 4A

FIG. 4B

FIG. 5

FIG. 6

FIG. 7

FIG. 8A

FIG. 8B

FIG. 8C

FIG. 9

FIG. 10

**EP 2 762 875 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011117872 A
- US 2329812 B
- GB 573182 A